Europäisches Patentamt

European Patent Office

Office européen des brevets

(11) Veröffentlichungsnummer : **0 458 026 B1**

(19)

(12) # EUROPÄISCHE PATENTSCHRIFT

(45) Veröffentlichungstag der Patentschrift :
23.12.92 Patentblatt 92/52

(21) Anmeldenummer : **91104205.9**

(22) Anmeldetag : **19.03.91**

(51) Int. Cl.⁵ : **F01L 3/06, F01L 3/22**

(54) **Ventilsitzring für eine Brennkraftmaschine.**

(30) Priorität : **24.05.90 DE 4016728**

(43) Veröffentlichungstag der Anmeldung :
**27.11.91 Patentblatt 91/48**

(45) Bekanntmachung des Hinweises auf die
Patenterteilung :
**23.12.92 Patentblatt 92/52**

(84) Benannte Vertragsstaaten :
**DE FR GB IT**

(56) Entgegenhaltungen :
**WO-A-88/06237**

(56) Entgegenhaltungen :
DE-A- 2 709 519
FR-A- 1 310 028
**PATENT ABSTRACTS OF JAPAN vol. 2, no. 44
(M-13)(68) 24 März 1978, & JP-A-53 1712 (NIS-
SAN) 10 Januar 1978,**

(73) Patentinhaber : **MERCEDES-BENZ AG
Mercedesstrasse 136
W-7000 Stuttgart 60 (DE)**

(72) Erfinder : **Dohnke, Oliver
Oldesloer Weg 23
W-1000 Berlin 20 (DE)**
Erfinder : **Albrecht, Peter
Schwenkgasse 69
W-7317 Wendlingen (DE)**

EP 0 458 026 B1

## Beschreibung

Die Erfindung betrifft einen Ventilsitzring für eine Brennkraftmaschine gemäß den im Oberbegriff des Patentanspruches 1 angegebenen Merkmalen.

Ein Ventilsitzring der gattungsgemäßen Bauart ist aus der Patentschrift FR-A-1 310 028 und der Automobiltechnischen Zeitschrift ATZ 89 (1987) 4, Seite 165 bis 167, bekannt.

Dort sind verschiedene Bauformen eines Ventilsitzringes dargestellt, um einen für den einzelnen Betriebsbereich optimalen Drall der Einlaßluft im Motorzylinder zu erzielen. Da jedoch während des Fahrbetriebes der Ventilsitzring nicht ausgetauscht werden kann, um immer einen an jeden Last- und Drehzahlbereich angepaßten optimalen Drall zu erhalten, muß bisher auf eine für alle Bereiche wirksame Kompomißlösung zwischen den starren Bauformen zur Drallerzeugung zurückgegriffen werden. Dabei ergibt sich jedoch für Betriebsbereiche, in denen die zur optimalen Drallbildung erforderliche Bauform des Ventilsitzringes besonders stark von der bisherigen baulichen Kompromißlösung abweicht, eine erhebliche Verminderung der Drallwirkung auf eine angestrebte gute Durchmischung des Luft-Kraftstoffgemisches im Zylinder, was sich negativ in einem erhöhten Kraftstoffverbrauch und einer erhöhten Schadstoffemission auswirkt.

Daher liegt der Erfindung die Aufgabe zugrunde, einen Ventilsitzring zu schaffen, der für alle Last- und Drehzahlbereiche eines Motors einen optimalen Drall der Einlaßluft bewirkt, um die obengenannten, aus der bisher verwandten Bauform des Ventilsitzringes resultierenden Nachteile zu beheben.

Die Aufgabe wird erfindungsgemäß durch die im Patentanspruch 1 angegebenen Merkmale gelöst.

Der Vorteil der Erfindung liegt in der Variierbarkeit der Innenkontur des zweiten Ventilsitzringabschnitts, der sich aus einem Ringträger und einem innenliegenden Membraneinsatz zusammensetzt. Die Membran wird von außen in Abhängigkeit von der Motorlast und der Drehzahl mit mehr oder weniger Druck beaufschlagt, so daß sie zu einem Leitpolster aufgebläht wird, welches zu jeder Zeit die zur optimalen Drallerzeugung günstigste Form annimmt.

Ferner ergibt sich aus der besonderen Ausgestaltung der Erfindung nach Anspruch 4 durch die Mehrkomponenten-Bauweise eine kostengünstigere Handhabung beim Wechsel von schadhaften Ventilsitzringen, da nur noch die beschädigte Komponente ersetzt werden muß.

In der nachfolgenden Zeichnungsbeschreibung wird ein Ausführungsbeispiel der Erfindung näher erläutert. Es zeigt:

Fig. 1 einen Zylinderkopfabschnitt mit einem Ventilsitzring, welcher einen Membraneinsatz mit ebenen Schenkeln und einem Ringträger mit einem Ringkanal und einer Bohrung besitzt, im Querschnitt,

Fig. 2 eine Ausgestaltung von Fig. 1 mit keilförmig ausgebildeten Schenkeln des Membraneinsatzes.

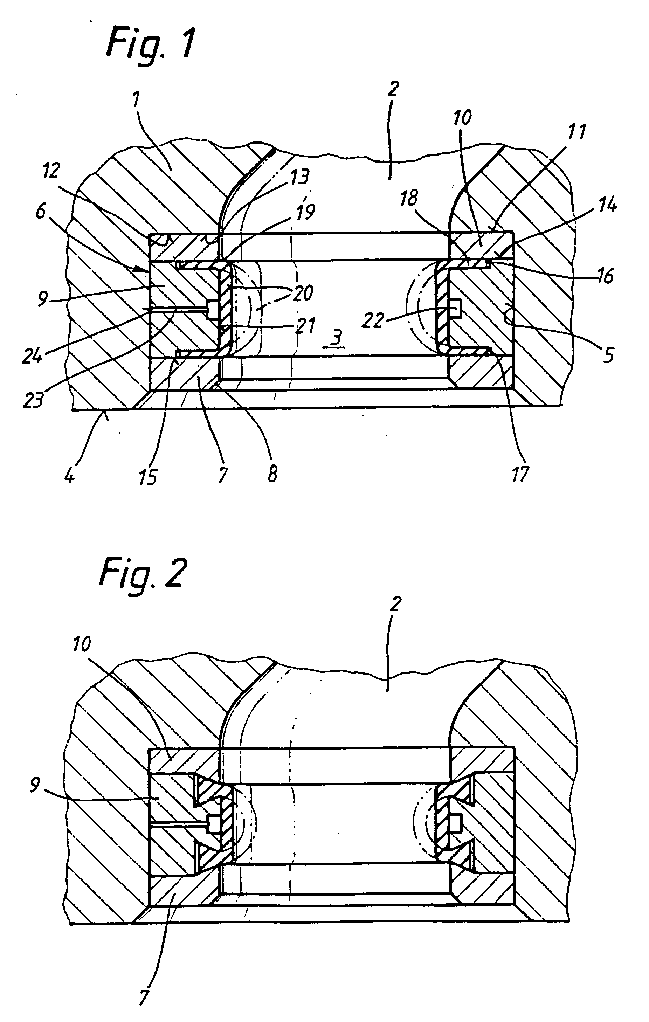

Nach Figur 1 verläuft in einem Zylinderkopfabschnitt 1 einer Brennkraftmaschine ein Einlaßkanal 2, um den in dessen Mündungsbereich 3 zu einem nicht weiter dargestellten Zylinderblock der Zylinderkopfabschnitt 1 eine zylindrische vom Zylinderkopfboden 4 aus in den Zylinderkopf sich erstreckende Ausnehmung 5 aufweist, wodurch der Einlaßkanal 2 zum Zylinderkopfboden 4 hin radial erweitert ist. In die Ausnehmung 5 ist ein Ventilsitzring 6 eingepaßt. Der Ventilsitzring 6 besteht aus zwei Abschnitten, wobei ein erster Abschnitt von einem unteren Ring 7 gebildet wird, an dem ein schräger Ventilsitz 8 vorgesehen ist. Ein zweiter stromauf des Einlaßkanals 2 gelegener Abschnitt besteht aus einem Ringträger 9, der sich unmittelbar an den Ring 7 anschließt, und aus einem oberen Ring 10, der mit dem Ring 7 den Ringträger 9 einfaßt und mit einer Oberseite 11 an einer ringförmigen Anlagefläche 12 eines infolge der radialen Erweiterung des Einlaßkanals 2 gebildeten Absatzes 13 anliegt. Der Ringträger 9 besitzt an einer Oberseite 14 und an einer Unterseite 15 senkrecht zur Einlaßkanalführung weisende, ebene ringförmige Aussparungen 16,17, in denen eben ausgebildete Schenkel 18 eines ringförmigen elastisch verformbaren Membraneinsatzes 19 mit U-Profil, der beispielsweise aus Viton bestehen kann, den Ringträger 9 längsseitig umgreifen. Die Schenkel 18 des Membraneinsatzes 19 sind in den Aussparungen 16,17 mit dem Ringträger 9 laserstrahlverschweißt. Eine weitere Befestigungsmöglichkeit des Membraneinsatzes 19 ist als einfache Verklemmung der Schenkel 18 in den Aussparungen 16,17 zwischen dem Ringträger 9 und den einfassenden Ringen 7,10 denkbar. Ein ebener, die Schenkel 18 verbindender Steg 20 des Membraneinsatzes 19 liegt innerhalb des Einlaßkanals 2 an einer Innenseite 21 des Ringträgers 9 längs angeordnet. In der Innenseite 21 verläuft mittig ein Ringkanal 22, zu dem von außen senkrecht zur Innenseite 21 eine Bohrung 23 führt. Die Bohrung 23 ist mit einem nach außen weisenden Ende 24 an einem außerhalb des Einlaßkanals 2 befindlichen und hier nicht weiter dargestellten Druckerzeuger angeschlossen.

In einer weiteren Ausgestaltung nach Fig. 2 sind die Schenkel 18 des Membraneinsatzes 19, sowie die Aussparungen 16,17 keilförmig ausgebildet, wobei sich die Schenkel 18 in Richtung des Steges 20 verjüngen.

Ein mittels des Druckerzeugers unter Druck gesetztes Medium gelangt über die Bohrung 23 in den Ringkanal 22, von dem aus der Steg 20 des Membraneinsatzes 19 senkrecht zur Luftströmungsrichtung in den Einlaßkanal 2 verdrängt wird. Da der Membraneinsatz 19 mit den Schenkeln 18 am Ringträger 9 befestigt ist und somit ein Widerstand dem Verdrängungsdruck entgegengebracht wird, wird der elastische ebene Steg 20 verwölbt. Dadurch wird ein Leitpolster zwischen der Innenseite 21 und dem Steg 20 geschaffen, welches der einströmenden Luft einen Drall gibt. Durch Regelung des Mediumdrucks kann das Leitpolster in seiner Verwölbung so variiert werden kann, daß für die durch den Einlaßkanal 2 strömende Luft der momentan benötigte Drall einstellbar ist. Um einen für alle Motorlast- und Drehzahlbereiche optimalen Drall der durch den Einlaßkanal 2 einströmenden Luft zu erhalten, wird deshalb der Druck des Mediums in Abhängigkeit von Motorlast und Drehzahl geregelt.

Im Rahmen der Erfindung ist es denkbar, durch unterschiedliche Wandstärken des Steges 20 oder durch einen anderen geeigneten Stegverlauf die Kontur des in den Einlaßkanal vorgewölbten Steges 20 zu ändern.

**Patentansprüche**

1. Ventilsitzring (6) für eine Brennkraftmaschine, welcher aus einem ersten Abschnitt (7) für den Ventilsitz und einem in einen Einlaßkanal (2) hineingelegten zweiten Abschnitt (9) besteht, der als drallbildender Körper ausgebildet ist, wobei der Ventilsitzring (6) um den Einlaßkanal (2) in einer zylindrischen vom Zylinderkopfboden (4) aus in den Zylinderkopf (1) sich erstreckenden Ausnehmung (5) angeordnet ist und an einem Absatz, welcher am Ende der Ausnehmung (5) als Übergang zum weiterführenden Einlaßkanal (2) ausgebildet ist, eine ringförmige Anlagefläche (12) besitzt,
   **dadurch gekennzeichnet,**
   daß der drallbildende Körper aus einem an einem Ringträger (9) gehaltenen ringförmigen Membraneinsatz (19) besteht und daß der Membraneinsatz (19) durch Anlegen eines Drucks senkrecht zur Luftströmungsrichtung zu einem drallbildenden Körper verformt werden kann.

2. Ventilsitzring nach Anspruch 1,
   **dadurch gekennzeichnet,**
   daß der Membraneinsatz (19) ein U-förmiges Profil besitzt, dessen beide Schenkel (18) eine Innenseite (21) des Ringträgers (9) längsseitig umfassen.

3. Ventilsitzring nach Anspruch 1 oder 2,
   **dadurch gekennzeichnet,**
   daß der Membraneinsatz (19) zwischen einem Ring (7), welcher als erster Abschnitt des Ventilsitzringes (6) den Ventilsitz (8) bildet, und der Anlagefläche (12) der Ausnehmung (5) eingeklemmt ist.

4. Ventilsitzring nach einem der Ansprüche 1 bis 3,
   **dadurch gekennzeichnet,**
   daß der Membraneinsatz (19) zwischen dem den Ventilsitz (8) bildenden Ring (7) und einem oberen Ring (10) eingeklemmt ist, welcher an der Anlagefläche (12) der Ausnehmung (5) gehalten ist.

5. Ventilsitzring nach einem der Ansprüche 1 bis 4,
   **dadurch gekennzeichnet,**
   daß das Profil der Schenkel (8) eben gestaltet ist.

6. Ventilsitzring nach einem der Ansprüche 1 bis 4,
   **dadurch gekennzeichnet,**
   daß das Profil der Schenkel (8) keilförmig gestaltet ist.

7. Ventilsitzring nach einem der Ansprüche 1 bis 6,
   **dadurch gekennzeichnet,**
   daß der Ringträger (9) an einer Oberseite (14) und einer Unterseite (15) ringförmige Aussparungen (16,17) aufweist, welche dem Profil der Schenkel (18) angepaßt sind, wobei der Ringträger (9) von den Schenkeln (18) in den Aussparungen (16,17) umgriffen ist.

8. Ventilsitzring nach einem der Ansprüche 1 bis 7,
   **dadurch gekennzeichnet,**
   daß an einer einlaßkanalseitigen Innenseite (21) des Ringträgers (9) ein Ringkanal (22) vorgesehen ist, an den eine nach außen führende Bohrung (23) angeschlossen ist.

9. Ventilsitzring nach einem der Ansprüche 1 bis 8,
   **dadurch gekennzeichnet,**
   daß der Ringkanal (22) mittig an der Innenseite (21) angeordnet ist.

10. Ventilsitzring nach einem der Ansprüche 1 bis 9,
    **dadurch gekennzeichnet,**
    daß ein nach außen weisendes Ende (24) der Bohrung (23) mit einem Anschluß an einen Druckerzeuger verbunden sind.

**Claims**

1. A valve seating ring (6) for an internal combustion engine and consisting of a first portion (7) for the valve seat and, placed in an inlet port (2) a second portion (3) which is constructed as a swirl-forming member, the valve seating ring (6) being disposed around the inlet port (2) in a cylindrical recess (5) extending from the cylinder head bottom and into the cylinder head and has an annular bearing surface on a shoulder which is constructed at the end of the recess as a transition to the onwardly extending inlet port (2), characterised in that the swirl-forming member consists of an annular diaphragm insert (19) supported on an ring carrier (9) and in that the diaphragm insert (19) can be deformed by the application of a pressure at right-angles to the direction of air flow to a swirl-forming member.

2. A valve seating ring according to Claim 1, characterised in that the diaphragm insert (19) has a U-shaped profile of which the two arms (18) engage longitudinally around an inside face (21) of the ring carrier (9).

3. A valve seating ring according to Claim 1 or 2, characterised in that the diaphragm insert (19) is clamped between, as the first portion of the valve seating ring (6), the valve seat (8), and the bearing surface (12) of the recess (5).

4. A valve seating ring according to one of Claims 1 to 3, characterised in that the diaphragm insert (19) is clamped between the ring (7) forming the valve seat (8) and an upper ring (10) which is held on the bearing surface (12) of the recess (5).

5. A valve seating ring according to one of Claims 1 to 4, characterised in that the profile of the arms (8) is plane.

6. A valve seating ring according to one of Claims 1 to 4, characterised in that the profile of the arms (8) is wedge-shaped.

7. A valve seating ring according to one of Claims 1 to 6, characterised in that the ring carrier (9) has on the top (14) and on an underside (15) annular recesses (16, 17) which match the profile of the arms (18), the ring carrier (9) being gripped by the arms (18) in the recesses (16, 17).

8. A valve seating ring according to one of Claims 1 to 7, characterised in that there is disposed on the inlet port end of the inside face (21) of the ring carrier (9) a ring channel (22) to which an outwardly extending bore (23) is connected.

9. A valve seating ring according to one of Claims 1 to 8, characterised in that the ring channel (22) is disposed centrally on the inside face (21).

10. A valve seating ring according to one of Claims 1 to 9, characterised in that an outwardly pointing end (24) of the bore (23) has a connection by which it is connected to a pressure generator.

**Revendications**

1. Anneau formant siège de soupape (6) pour un moteur à combustion interne, qui se compose d'une première partie (7) pour le siège de soupape et d'une seconde partie (9) engagée dans un canal d'admission (2) et qui est agencée sous forme d'un corps générateur de turbulence, lequel anneau formant siège de soupape (6) est disposé, autour du canal d'admission (2), dans un évidement cylindrique (5) s'étendant depuis le fond de culasse jusque dans la culasse et comporte une surface annulaire d'appui (12) sur un épaississement qui est formé à l'extrémité de l'évidement (5) en tant que transition vers la suite du canal d'admission (2), caractérisé en ce que le corps générateur de turbulence se compose d'un élément d'insertion (19) en forme de membrane annulaire, maintenu sur un support annulaire (9), et en ce que l'élément d'insertion (19) en forme de membrane peut, par application d'une pression perpendiculairement au sens d'écoulement de l'air, être déformé en un corps générateur de turbulence.

2. Anneau formant siège de soupape selon la revendication 1, caractérisé en ce que l'élément d'insertion (19) en forme de membrane a un profil en forme de U, dont les deux branches (18) bordent sur leur longueur un côté intérieur (21) du support annulaire.

3. Anneau formant siège de soupape selon la revendication 1 ou 2, caractérisé en ce que l'élément d'insertion (19) en forme de membrane est serré entre une bague (7), qui constitue, comme première partie de l'anneau formant siège de soupape (6), le siège de soupape (8), et la surface d'appui (12) de l'évidement (5).

4. Anneau formant siège de soupape selon une des revendications 1 à 3, caractérisé en ce que l'élément d'insertion (19) en forme de membrane est serré entre la bague (7) constituant le siège de soupape (8) et une bague supérieure (10), qui est maintenue contre la surface d'appui (12) de l'évidement (5).

5. Anneau formant siège de soupape selon une des revendications 1 à 4, caractérisé en ce que le profil des branches (8) est plan.

6. Anneau formant siège de soupape selon une des revendications 1 à 4, caractérisé en ce que le profil des branches (8) a une forme de coin.

7. Anneau formant siège de soupape selon une des revendications 1 à 6, caractérisé en ce que le support annulaire (9) comporte, sur un côté supérieur (14) et un côté inférieur (15), des évidements (16, 17) de forme annulaire qui sont adaptés au profil des branches (18), le support annulaire (9) étant entouré par les branches (18) dans les évidements (16, 17).

8. Anneau formant siège de soupape selon une des revendications 1 à 7, caractérisé en ce qu'il est prévu, sur un côté intérieur (21), dirigé vers le canal d'admission, du support annulaire (9) un canal annulaire (22) auquel est relié un trou (23) débouchant à l'extérieur.

9. Anneau formant siège de soupape selon une des revendications 1 à 8, caractérisé en ce que le canal annulaire (22) est disposé au milieu du côté intérieur (21).

10. Anneau formant siège de soupape selon une des revendications 1 à 9, caractérisé en ce qu'une extrémité (24), orientée vers l'extérieur, du trou (23) est reliée à un raccord prévu sur un générateur de pression.

## Fig. 1

## Fig. 2